# EUROPEAN PATENT APPLICATION

(11) **EP 1 903 255 A2**
(43) Date of publication of application: **26.03.2008**
(21) Application number: 07012834.3
(22) Date of filing: 29.06.2007
(51) Int. Cl.: F16H 3/62

(54) **Automatic transmission**

(30) Priority: 20.09.2006 JP 2006254466
(71) Applicant: Mazda Motor Corporation, Aki-gun, Hiroshima 730-8670 (JP)
(72) Inventor: Iwashita, Norio, Aki-gun Hiroshima 730-8670 (JP); Kamada, Shinya, Aki-gun Hiroshima 730-8670 (JP); Teraoka, Takamichi, Aki-gun Hiroshima 730-8670 (JP); Saka, Tokimori, Aki-gun Hiroshima 730-8670 (JP); Doi, Junichi, Aki-gun Hiroshima 730-8670 (JP); Iwasaki, Tatsuhiko, Aki-gun Hiroshima 730-8670 (JP)
(74) Representative: Herrmann, Uwe

(57) **Abstract**

There are provided a first planetary gear set (**7**) including a first sun gear (**S1**), a first carrier (**CA1**), and a first ring gear (**R1**); a second planetary gear set (**8**) including a second sun gear (**S2**), a second carrier (**CA2**), and a second ring gear (**R2**); and a third planetary gear set (**9**) including a third sun gear (**S3**), a third carrier (**CA3**), and a third ring gear (**R3**). A first forward speed ratio is established with the engagement of a third brake (**B3**) and a first clutch (**CL1**)**;** a second forward speed ratio is established with the engagement of a first brake (**B1**) and the first clutch (**CL1**); a third forward speed ratio is established with the engagement of a second brake (**B2**) and the first clutch (**CL1**); a fourth forward speed ratio is established with the engagement of the first clutch (**CL1**) and a second clutch (**CL2**); a fifth forward speed ratio is established with the engagement of the second brake (**B2**) and the second clutch (**CL2**); and a sixth forward speed ratio is established with the engagement of the first brake (**B1**) and the second clutch (**CL2**). This attains an automatic transmission providing six forward speed ratios which has high transmission efficiency, is compact, and has a suitable gearing pattern.

## Description

### Background of the Invention

### Field of the Invention

The present invention relates to automatic transmissions, and more particularly relates to an automatic transmission providing six forward speed ratios by using five friction elements.

### Description of the Related Art

Conventionally, automatic transmissions have been known which provide six forward speed ratios by using five friction elements. In such an automatic transmission providing six forward speed ratios, there are several trillions gearing patterns of elements, and therefore, appropriate selection of a gearing pattern is a key issue.

In gearing pattern selection, several requisites must be met: (1) no high-speed rotary member should be used for preventing seizing caused due to insufficient lubrication; (2) gear change for transmission should be done smoothly; (3) transmission efficiency of gears should be increased; and the like.

For example, Japanese Patent Application Laid Open Publication No. 2000-199549 discloses an automatic transmission for a vehicle which includes: a planetary gear set receiving decelerated rotation and non-decelerated rotation as input and outputting various speed-changed rotations; a deceleration planetary gear provided along the planetary gear set in the axial direction; an input shaft passing through the planetary gear set; and first and third clutches connecting/disconnecting the input shaft to/from two different transmission elements of the planetary gear set through the deceleration planetary gear. The planetary gear set of this automatic transmission is of generally called ravigneaux type. The deceleration planetary gear and the third clutch are arranged on one side of the planetary gear set while the first clutch is arranged on the other side thereof.

In the automatic transmission of the above reference, however, the rotation of the input shaft is first decelerated at the deceleration planetary gear, and accordingly, the section receiving the decelerated rotation must have enough rigidity to withstand the increased torque. Further, the ravigneaux type planetary gear set uses a long pinion, which necessitates ensured support rigidity. Insufficient rigidity leads to gear noise while sufficient rigidity leads to increases in size of the members and in cost. In addition, a double pinion is used inevitably for power transmission especially in high speed ratios, involving lowering of transmission efficiency.

### Summary of the Invention

The present invention has been made in view of the foregoing and has its object of providing an automatic transmission providing six forward speed ratios which is compact, exhibits high transmission efficiency, and has a suitable gearing pattern.

To attain the above object, in the present invention, two clutches are connected directly to an input shaft and no double pinion is used for power transmission especially in the sixth forward speed ratio that is frequently established.

Specifically, a first aspect of the present invention is directed to an automatic transmission in which an output section is arranged coaxially with an input shaft in a casing. The automatic transmission is characterized by including a first planetary gear set including a first sun gear, a first carrier, a first ring gear, and a single pinion; a second planetary gear set including a second sun gear, a second carrier, a second ring gear, and a single pinion; a third planetary gear set including a third sun gear, a third carrier, a third ring gear, and a single pinion; a first clutch connecting/disconnecting the third sun gear to/from the input shaft; a second clutch connecting/disconnecting the second carrier to/from the input shaft; a first brake connecting/disconnecting the first carrier to/from the casing; a second brake connecting/disconnecting the first ring gear to/from the casing; and a third brake connecting/disconnecting the second carrier to/from the casing, wherein the first sun gear is connected to the input shaft all time, the first carrier is connected to the second sun gear all time, the second carrier is connected to the third ring gear all the time, and the second ring gear is connected all time to the third carrier connected all time to the output section, a first forward speed ratio is established with engagement of the first clutch and the third brake, a second forward speed ratio is established with engagement of the first clutch and the first brake, a third forward speed ratio is established with engagement of the first clutch to the second brake, a fourth forward speed ratio is established with engagement of the first clutch to the second clutch, a fifth forward speed ratio is established with engagement of the second clutch to the second brake, and a sixth forward speed ratio is established with engagement of the second clutch to the first brake.

With the above arrangement, the two clutches are connected directly to the input shaft to prevent torque from increasing, so that the capacity of the clutches can be minimized. Hence, the automatic transmission is reduced in size as a whole. A long pinion as employed in a ravigneaux type planetary gear set is not employed, so that rigidity can be ensured easily, resulting in cost reduction and prevention of gear noise. Particularly, transmission in high-speed ratios can be done with the use of only two planetary gear sets to prevent gearing efficiency from lowering. With no double pinion employed, the number of components is reduced. As well, gearing efficiency increases since no double pinion is used for establishing any of the speed ratios.

Referring to a second aspect of the present invention, in the above automatic transmission, one end of the input shaft is connected to an engine, the first planetary gear set, the second planetary gear set, and the third planetary gear set are arranged coaxially with the input shaft in this order from another end thereof, and the first clutch and the second clutch are arranged on the one end side of the third planetary gear set while the output section is arranged between the third planetary gear set and the first and second clutches.

With the above arrangement, the output section can be arranged near the engine so that the counter drive gear can be centered in the widthwise direction, thereby shortening the length of the counter shaft to allow the differential unit to be centered in the widthwise direction. This attains compact layout of a transverse transmission and improved trafficability.

Referring to a third aspect of the present invention, in the above automatic transmission, one end of the input shaft is connect to an engine, the first planetary gear set, the second planetary gear set, and the third planetary gear set are arranged coaxially with the input shaft in this order from the one end thereof, and the output section is arranged coaxially with the input shaft on the other end side thereof to serve as an output shaft.

This enables layout of a transverse transmission to lead to application of the present invention to front-engine/rear-drive automobile vehicles.

### Effects of the Invention

As described above, in the present invention, the two clutches are connected to the input shaft directly to prevent torque from increasing and to eliminate the need for providing a long pinion and a double pinion, which are used in the ravigneaux type one. This attains an automatic transmission providing six forward speed ratios which is compact, exhibits high transmission efficiency, and has a suitable gearing pattern.

### Brief Description of the Drawings

FIG. **1** is a sectional view showing an automatic transmission in accordance with an embodiment of the present invention.
FIG. **2** is a skeleton diagram view of the automatic transmission.
FIG. **3** is a table showing the relationship between operation of the automatic transmission and gear ratios or gear ratio steps.
FIG. **4** is a velocity diagram of the automatic transmission.
FIG. **5** is a view for another embodiments which corresponds to FIG. 1

### Description of the Preferred Embodiments

Embodiments of the present invention will be described below with reference to the accompanying drawings.

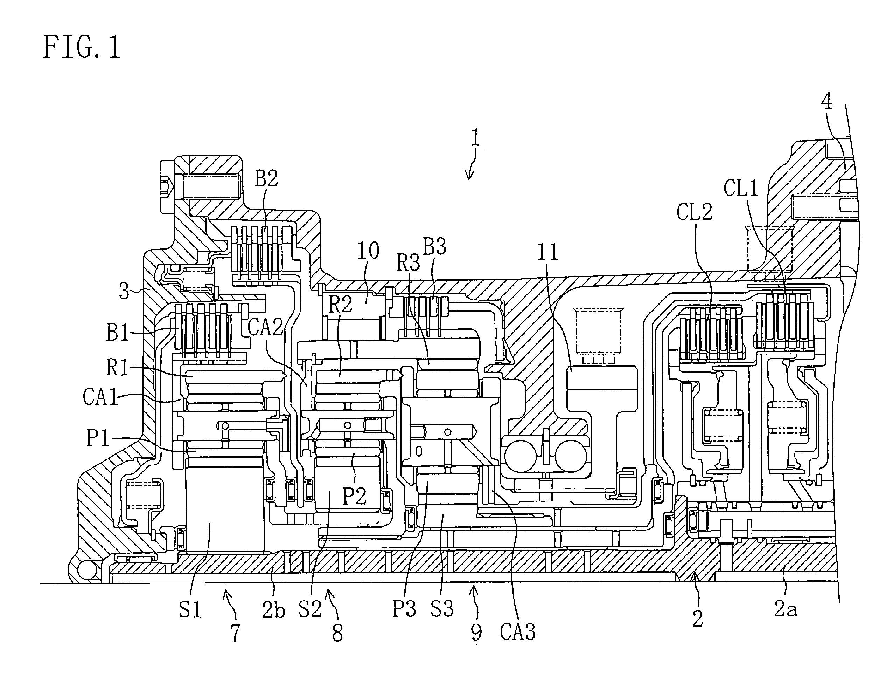

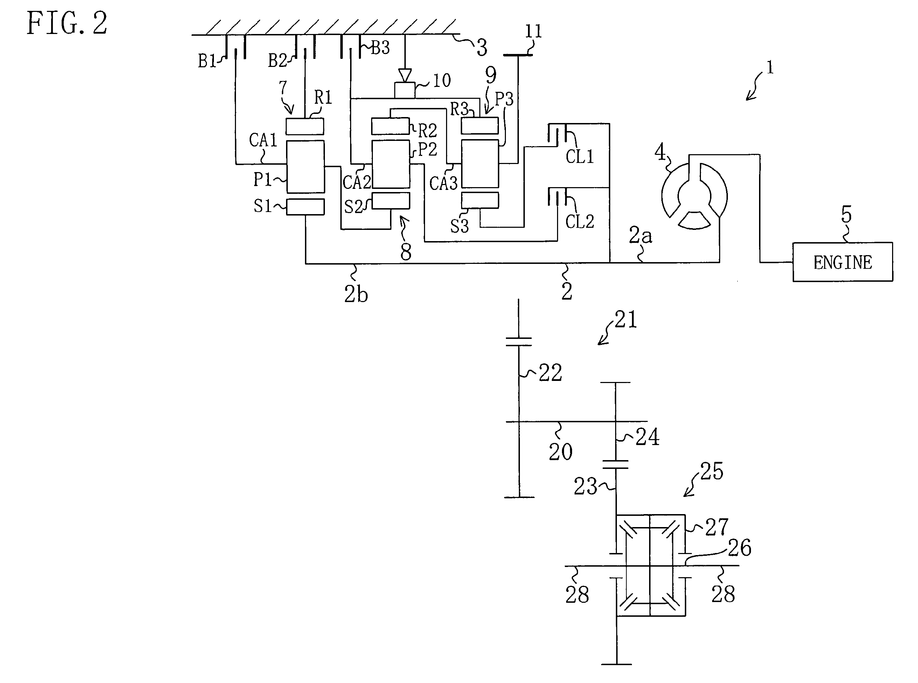

FIG. **1** is a sectional view of an automatic transmission in accordance with an embodiment of the present invention, and FIG. **2** is a skeleton diagram thereof. The automatic transmission **1** of the present embodiment provides six forward speed ratios and one reverse speed ratio for a front-engine/front-drive automobile vehicle, wherein: an input shaft **2** is inserted through a transmission casing **3;** an output section is arranged coaxially with the input shaft **2;** one end **2a** of the input shaft **2** is connected to an engine **5** through a torque converter **4** with a lockup clutch; and a first planetary gear set **7,** a second planetary gear set **8,** a third planetary gear set **9** are arranged coaxially with the input shaft **2** in this order from the other end **2b** thereof. Wherein, the torque converter **4** may not be provided.

The first planetary gear set **7** includes a first sun gear **S1,** a first carrier **CA1,** and a first ring gear **R1,** which are arranged coaxially with the input shaft **2.** A single pinion **P1** is provided at the first carrier **CA1.** The first sun gear **S1** is connected to the input shaft **2** all the time. A first brake **B1** connects/disconnects the first carrier **CA1** to/from the transmission casing **3.** A second brake **B2** connects/disconnects the first ring gear **R1** to/from the transmission casing **3.**

The second planetary gear set **8** includes a second sun gear **S2**, a second carrier **CA2,** and a second ring gear **R2,** which are arranged coaxially with the input shaft **2.** A single pinion **P2** is provided at the second carrier **CA2.** The second sun gear **S2** is connected to the first carrier **CA1** all the time.

The third planetary gear set **9** includes a third sun gear **S3,** a third carrier **CA3,** and a third ring gear **R3,** which are arranged coaxially with the input shaft **2.** A single pinion **P3** is provided at the third carrier **CA3**. The third ring gear **R3** is connected to the second carrier **CA2** all the time. The third carrier **CA3** is connected to the second ring gear **R2** all the time. A third brake **B3** connects/disconnects the second carrier **CA2** to/from the transmission casing **3.** A one-way clutch **10** is provided beside the third brake **B3**.

A first clutch **CL1** and a second clutch **CL2** are provided on the one end **2a** side of the third planetary gear set **9.** The first clutch **CL1** connects/disconnects the third sun gear **S3** to/from the input shaft **2** while the second clutch **CL2** connects/disconnects the second carrier **CA2** to/from the input shaft **2.** The first and second clutches **CL1, CL2** are composed of multiple-disc clutches.

The first to third brakes **B1** to **B3** are of multiple-dick clutch type in this embodiment, but may be of band clutch type.

Between the third planetary gear set **9** and the first and second clutches **CL1, CL2,** a counter drive gear **11** is provided as the aforementioned output section. The third carrier **CA3** is connected to the counter drive gear **11** all the time. A counter shaft **20** is arranged in parallel with the input shaft **2.** A counter gear **21** is arranged on the counter shaft **20.** The counter gear **21** includes a large-diameter counter driven gear **22** and a small-diameter differential drive pinion gear **24.** The counter driven gear **22** meshes with the counter drive gear **11** while the differential drive pinion gear **24** meshes with a differential ring gear **23.** With the counter shaft **20,** the counter driven gear **22,** the differential ring gear **23,** and the differential drive pinion gear **24,** the output of the input shaft **2** is decelerated while being reversed and transmitted to the differential unit **25.** The differential unit **25** is arranged on a differential shaft **26.** In the differential unit **25,** a differential transmission casing **27** fixed to the differential ring gear **23** is arranged. Differential rotation of a differential gear disposed therein is output to a transverse shaft **28** as final drive power for the vehicle.

The above arrangement is determined from the following five requisites.
(1) No high-speed rotary member should be employed. Because: rotation around 20000 to 30000 rpm of a member causes insufficient lubrication, leading to seizing.
(2) Gear change should be done smoothly.
(3) Transmission efficiency of gears should be increased.
(4) A double pinion should not be used as far as possible in high speed ratios.
(5) Five friction elements of clutches and brakes are used in total.

As shown in **FIG. 1,** the first sun gear **S1** determined from the above five requisites is larger than the other sun gears **S2, S3,** but may be reduced in weight by forming a through hole (not shown) or providing another countermeasure.

### Transmission

Transmission by the automatic transmission **1** in accordance with the present invention will be described next.

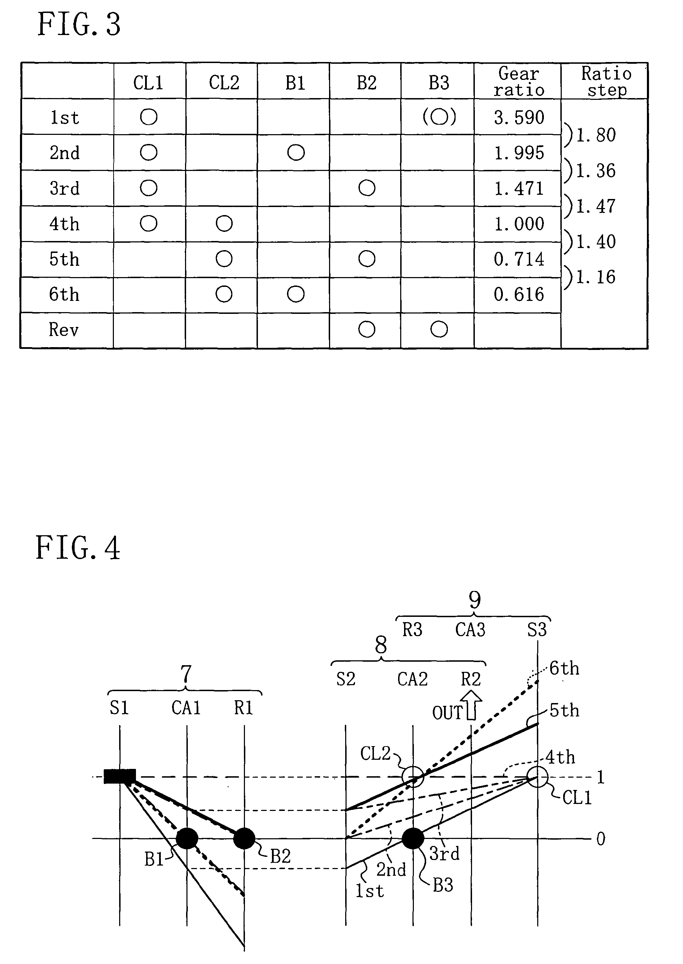

FIG. **4** is a velocity diagram showing the relationships between the respective forward speed ratios established with engagement among the clutches **CL1, CL2** (indicated by white circles) and the brakes **B1** to **B3** (indicted by black circles) and respective forward speed ratios of each transmission element under the relationships. A black tetragon indicates an all-time fixed state. In FIG. **4,** the vertical lines indicate the elements of the first to third planetary gear sets **7** to **9.** The transverse widths between the respective vertical lines imply the gear ratios while the vertical level implies speed ratios. In the vertical level, **1** indicates rotation at the same speed as that of the input shaft **2,** 0 indicates no rotation, and below 0 (minus) indicates reverse rotation. The white arrow (OUT) indicates output. It should be noted that though the transverse widths present not so accurate gear ratios for the sake of simplicity, the vertical level presenting the speed ratios of the third carrier **CA3** (the second ring gear **R2)** connected to the output section suggests schematic ratio steps between the respective forward speed ratios.

The first forward speed ratio is established with the engagement of the first clutch **CL1** and the third brake **B3.** In detail, the rotation of the input shaft **2** is input to the third sun gear **S3** through the first clutch **CL1,** and the third carrier **CA3** rotates while receiving the reactive force of the third ring gear **R3** locked up by engagement of the won-way clutch **10.** The thus decelerated rotation at a maximum deceleration ratio is output to the counter drive gear **11.** At the output, as shown in FIG. **2,** the one-way clutch **10** is automatically connected, in place of the third brake **B3,** to the first clutch **CL1.** Specifically, the one-way clutch **10** is allowed to exhibit a function substantially equivalent to that of the third brake **B3,** and the first clutch **CL1** engages with the second carrier **CA2** (the third ring gear **R3)** rather than the third brake **B3** at the first forward speed ratio. When engine braking is desired as in down slope running, engagement of the third brake **B3** is necessary as indicated by the white circuit in the parentheses in FIG. **3.** For attaining an automatic transmission providing six forward speed ratios, the first forward speed ratio may be established by connecting the third brake **B3** to the first clutch **CL1** without using the one-way clutch **10.**

The second forward speed ratio is established with the engagement of the first clutch **CL1** and the first brake **B1.** In detail, the rotation of the input shaft **2** is input to the third sun gear **S3** through the first clutch **CL1,** but the first carrier **CA1** and the second sun gear **S2** connected all the time to the first carrier **CA1** do not rotate by the engagement of the first brake **B1.** The input of the third sun gear **S3** receiving the reactive force of the second sun gear **S2** is transmitted to the third carrier **CA3**, and then, the thus decelerated rotation is output to the counter drive gear **11.** The deceleration ratio at this time point is smaller than that at the first forward speed ratio, as shown in FIG. **4.**

The third forward speed ratio is established with the engagement of the first clutch **CL1** and the second brake **B2.** In detail, the rotation of the input shaft **2** is input to the third sun gear **S3** through the first clutch **CL1** while being input thereto through the first sun gear **S1**, and the rotation of the first carrier **CA1** receiving the reactive force of the first ring gear **R1** locked up by the engagement of the second brake **B2** is input to the second sun gear **S2.** The thus decelerated rotation of the third carrier **CA3,** which is intermediate rotation between the input rotation of the third sun gear **S3** and the input rotation the second sun gear **S2,** is output to the counter drive gear **11.** The deceleration ratio at this time point is smaller than that at the second forward speed ratio, as shown in FIG. **4.**

The fourth forward speed ratio is established with the engagement of the first clutch **CL1** and the second clutch **CL2.** In detail, the rotation of the input shaft **2** is input to the third sun gear **S3** through the first clutch **CL1** while being input to the second carrier **CA2** through the second clutch **CL2**. The second planetary gear set **8** is in direct connection with the third planetary gear set **9,** so that the rotation at the same speed as input rotation of the third ring gear **R3** and the third sun gear **S3**, that is, the rotation at the same speed as the input shaft **2** is output to the counter drive gear **11.** The deceleration ratio at that time point is 1.0 accordingly.

The fifth s forward peed ratio is established with the engagement of the second clutch **CL2** and the second brake **B2**. In detail, the rotation of the input shaft **2** is input to the second carrier **CA2** through the second clutch **CL2** while being input thereto through the first sun gear **S1,** and the rotation of the first carrier **CA1** receiving the reactive force of the first ring gear **R1** locked up by the engagement of the second brake **B2** is input to the second sun gear **S2.** The thus accelerated rotation of the second carrier **CA2** and that of the third carrier **CA3,** which is determined by the input rotation of the second sun gear **S2,** are output to the counter drive gear **11.** The deceleration ratio at this time point is smaller than that at the fourth forward speed ratio, as shown in FIG. **4.**

The sixth forward speed ratio is established with the engagement of the second clutch **CL2** and the first brake **B1.** In detail, the rotation of the input shaft **2** is input to the second carrier **CA2** through the second clutch **CL2**, and the third carrier **CA3** receiving the reactive forces of the first carrier **CA1** and the second sun gear **S2,** both being locked up by the engagement of connection to the first brake **B1.** The thus accelerated rotation is output to the counter drive gear **11.** The deceleration ratio at this time point is smaller than that at the fifth forward speed ratio.

As described above, in any of the above forward speed ratios, the rotation is transmitted without using any double pinion, notably increasing the gearing efficiency. As well, the number of components is reduced to result in cost reduction.

Though not described in detail, the reverse speed ratio (REV) is established with the engagement of the second brake **B2** and the third brake **B3**.

In any the above described speed ratios, when the numbers of gear teeth of the elements are set as listed in Table 1, the gear ratios at the respective speed ratios and the ratio steps between the respective gear ratios can be indicated in FIG. **3.**

**Table 1**

| | S | R | P1 | P2 |
|---|---|---|---|---|
| First planetary gear set | 53 | 95 | 21 | 0 |
| Second planetary gear set | 63 | 101 | 19 | 0 |
| Third planetary gear set | 39 | 101 | 31 | 0 |

### Effects of Embodiment

As described above, in the automatic transmission in accordance with the present embodiment, the two clutches are directly connected to the input shaft **2,** and neither a long pinion nor a double pinion is employed unlike automatic transmissions of ravigneaux type. Hence, torque is prevented from increasing, and an automatic transmission providing six forward speed ratios can be attained which is compact, exhibits high transmission efficiency, and has a suitable gearing pattern. With no double pinion employed, the number of components is reduced, resulting in cost reduction.

Further, the counter drive gear **11** can be centered in the widthwise direction to shorten the length of the counter shaft **20,** resulting in the differential unit **25** centered in the widthwise direction. This attains compact layout of a transverse transmission and improves trafficability.

### Other Embodiments

The present invention may employ any of the following configurations in the above embodiment. Namely:

In the present embodiment directed to a front-engine/front-drive automobile vehicle, the engine **5** is arranged on the one end **2a** side of the input shaft **2** but may be arranged on the other end **2b** side thereof. Wherein, the arrangement of the engine **2** on the one end **2a** side of the input shaft **2** allows the counter drive gear **11** to be centered in the widthwise direction to shorten the length of the counter shaft **20,** thereby attaining the differential unit **25** centered in the widthwise direction. Therefore, the arrangement in the above embodiment is preferable in view of the trafficability of the vehicle.

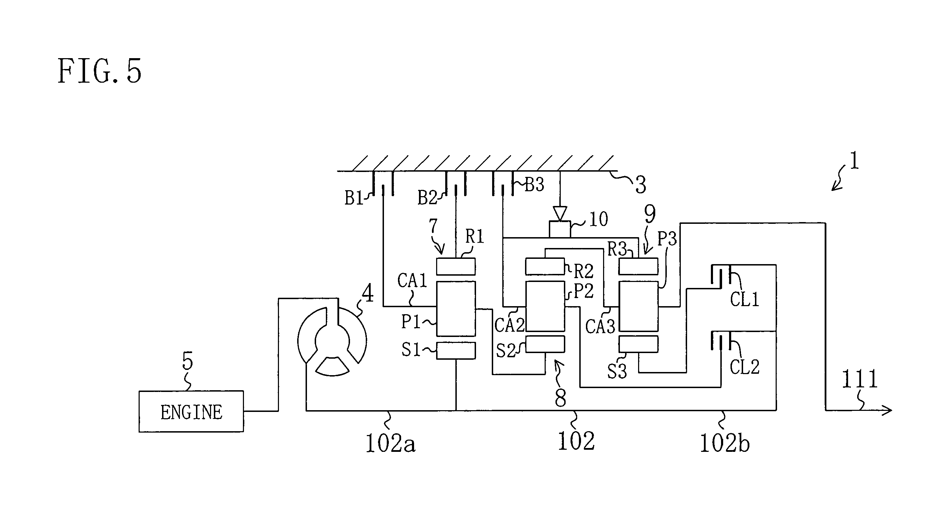

Optionally, in the case where the present invention is applied to, for example, a front-engine/rear-drive automobile vehicle, as shown in FIG. **5,** one end **102a** (on the vehicle front side) of the input shaft **102** is connected to the engine **5** and the first to third planetary gears **7, 8, 9** are arranged coaxially with the input shaft **102** in this order from the one end **102a.** In this case, the output section is provided coaxially with the input shaft **102** on the other end **102b** thereof as an output shaft **111.** The output shaft **11** is connected to a propeller shaft not shown. This arrangement attains layout of a transverse transmission suitable for front-engine/rear-drive automobile vehicles.

The above described embodiments are substantially preferred examples and do not intend to limit the present invention and the scopes of applicable subjects and usage.

## Claims

1. An automatic transmission providing six forward speed ratios, which has an output section **(11, 111)** arranged coaxially with an input shaft **(2, 102)** in a casing **(3), characterized by** comprising:
a first planetary gear set **(7)** including a first sun gear **(S1),** a first carrier **(CA1),** a first ring gear **(R1),** and a single pinion **(P1);**
a second planetary gear set **(8)** including a second sun gear **(S2),** a second carrier **(CA2),** a second ring gear **(R2 )**, and a single pinion **(P2);**
a third planetary gear set **(9)** including a third sun gear **(S3),** a third carrier **(CA3),** a third ring gear **(R3),** and a single pinion **(P3)**;
a first clutch **(CL1)** connecting/disconnecting the third sun gear **(S3)** to/from the input shaft **(2, 102);**
a second clutch **(CL2)** connecting/disconnecting the second carrier **(CA2)** to/from the input shaft **(2, 102);**
a first brake **(B1)** connecting/disconnecting the first carrier **(CA1)** to/from the casing **(3);**
a second brake **(B2)** connecting/disconnecting the first ring gear **(R1)** to/from the casing **(3);** and
a third brake **(B3)** connecting/disconnecting the second carrier (CA2) to/from the casing **(3),**
wherein the first sun gear **(S1)** is connected to the input shaft **(2, 102)** all time, the first carrier **(CA1)** is connected to the second sun **(S2)** gear all time, the second carrier **(CA2)** is connected to the third ring gear **(R3)** all the time, and the second ring gear **(R2)** is connected all time to the third carrier **(CA3)** connected all time to the output section **(11, 111),**
a first forward speed ratio is established with engagement of the first clutch **(CL1)** and the third brake **(B3),**
a second forward speed ratio is established with engagement of the first clutch **(CL1)** and the first brake **(B1),**
a third forward speed ratio is established with engagement of the first clutch **(CL1)** to the second brake **(B2),**
a fourth forward speed ratio is established with engagement of the first clutch **(CL1)** to the second clutch **(CL2),**
a fifth forward speed ratio is established with engagement of the second clutch **(CL2)** to the second brake **(B2),** and
a sixth forward speed ratio is established with engagement of the second clutch **(CL2)** to the first brake **(B1).**

2. The automatic transmission of Claim 1,
wherein one end **(2a)** of the input shaft **(2)** is connected to an engine **(5),**
the first planetary gear set **(7),** the second planetary gear set **(8),** and the third planetary gear set **(9)** are arranged coaxially with the input shaft **(2)** in this order from another end **(2b)** thereof, and
the first clutch **(CL1)** and the second clutch **(CL2)** are arranged on the one end **(2a)** side of the third planetary gear set **(9)** while the output section **(11)** is arranged between the third planetary gear set **(9)** and the first and second clutches **(CL1, CL2).**

3. The automatic transmission of Claim 1,
wherein one end **(102a)** of the input shaft **(102)** is connect to an engine **(5),**
the first planetary gear set **(7),** the second planetary gear set **(8),** and the third planetary gear set **(9)** are arranged coaxially with the input shaft **(102)** in this order from the one end **(102a)** thereof, and
the output section is arranged coaxially with the input shaft **(102)** on the other end **(102b)** side thereof to serve as an output shaft **(111).**
